# EUROPEAN PATENT APPLICATION

(11) **EP 0 989 044 A1**
(43) Date of publication of application: **29.03.2000**
(21) Application number: 97927388.5
(22) Date of filing: 19.06.1997
(51) Int. Cl.: B62B 13/08, B62B 13/04, A63C 5/00

(54) **SLOPE BIKE**

(71) Applicant: Kishi, Mitsunari, Fushimi-ku, Kyoto-fu 612 (JP)
(72) Inventor: Kishi, Mitsunari, Fushimi-ku, Kyoto-fu 612 (JP)
(74) Representative: Barnard, Eric Edward
(86) International application number: JP9702099
(87) International publication number: WO9857836

(57) **Abstract**

A slope bike (1) capable of absorbing impact and vibration at the time of sliding by a simple construction. A frame main body (2) as a principal constituent member of the slope bike (1) is made of carbon fibers which are tough and light in weight and have elasticity. This frame main body (2) has a generally U-shape in a transverse direction, and a saddle (14) on which a driver is seated is disposed at the rear part of an upper plate (12). The lower surface of the frame main body (2) is used as a sliding surface, and the turning operation of a handle (4) is interlocked with the operation of a steering device (3). The bike can freely slide by the turning operation of the handle (4). Impact and vibration at the time of sliding are absorbed by the frame main body (2) itself.

## Description

### FIELD OF THE INVENTION

This invention relates to a snow-slow bike that, using no power source such as an electric motor or combustion engine, allows the rider to slide freely downward and in the left and right directions over a snow-covered downhill slope.

### BACKGROUND OF THE RELATED ART

Regarding the existing tools, devices, machines, etc. used for sliding freely down ski slopes, etc., skis, snowboards, sleds, bobsleds, snow-bicycles, etc. are generally used. These sliding devices, unlike the snowmobile etc., use no power source such as an electric motor or combustion engine but rely solely on the force of gravity and allow their riders to steer freely in any desired direction and enjoy sliding down a downhill slope.

In recent years, many young people have grown bored with simply skiing and have turned to snowboarding, producing a dramatic increase in the snowboarding population. The snow-bicycle, which has a structure that is totally different from that of skis and snowboards, is also becoming popular. The conventional snow-bicycle has the structure of a normal bicycle on which runners have replaced the wheels.

For instance, one example of the conventional snow-bicycle can be found in JIKKOSHO No. 57-21818. Regarding the snow-bicycle shown in JIKKOSHO No. 57-21818, the front and rear wheels have simply been replaced by runners and it is composed of a roughly triangular frame made of steel pipe or aluminum pipe, a saddle mounted on the rear upper part of this frame, a handle that can be freely turned left and right mounted at the front part of the frame, a front runner attached beneath the handle, and a rear runner attached beneath the rear part of the frame.

The structure of this conventional snow-bicycle is based primarily on the design concept of the ordinary bicycle for operation on the road and therefore gives rise to a number of problems, which are described below.

When sliding down a slope, there is a need to absorb the impact caused by the unevenness of the slope's surface and the necessary means are provided for on the conventional snow-bicycle. However, the structure of the impact absorbing mechanism on the snow-bicycle is provided between the lower part of the handle shaft and the front runner or between the lower part of the frame and the rear runner as an independent member (device). This means additional members for attaching the impact absorbing device between the runner and the frame, thereby increasing the number of parts, which raises costs, and making the composition more complex, which reduces assembly efficiency during production.

The conventional snow-bicycle has a frame made of steel pipe or aluminum pipe, making it relatively heavy and therefore inconvenient to carry. In addition, when sliding down a slope, there is always a chance of colliding with others, so when the snow-bicycle is made up mostly of steel pipe and other metal parts, the force of impact in a collision is relatively great and, depending on the type of collision, there is even the danger of injury. The design of the conventional snow-bicycle shown in JIKKOSHO No. 57-218182 is still based on the design of the ordinary bicycle for operation on the road and its design impact is extremely poor.

This invention is proposed as a solution to all the problem points described above. It is intended to provide a snow-slow bike designed to absorb impacts during sliding without using any special device or separate device and a snow-slow bike that is lightweight, thereby reducing the possibility of injury in a collision or minimizing the damage if someone does get injured.

Moreover, this invention is intended to provide a snow-slow bike with lower assembly costs, superior design, and greater design impact, besides featuring a structure for absorbing impacts during sliding.

### SUMMARY OF THE INVENTION

The snow-slow bike of this invention is characterized by being composed of the main frame 2 made of carbon fiber and formed in a roughly horizontal "U" shape, where the rear part of the upper piece 12 is made into a seat and the lower surface of the lower piece 11 is made into a sliding surface; the handle shaft 5 attached to rotate freely on the curved part 13 forming the front part of the main frame 2; the freely rotating handle 4 mounted on top of the handle shaft 5; and the steering device 3, inter-linked with the operation of the handle 4, connected to the lower part of the handle shaft 5.

Based on this composition, the person P sits on the saddle 14, places his feet in front foot brace 16, and slides down the slope. While sliding down a slope on the snow-slow bike, the person can turn the snow-slow bike to the left or right by turning the handle 4. As when using ordinary skis, one may also turn by using the edge of the steering device 3 or the edge of the lower piece 11 of the main frame 2 by tilting the snow-slow bike as with ordinary skis. To stop, sliding may be halted by braking by using the edge of the steering device 3 or the edge of the lower piece 11 of the main frame 2 as with ordinary skis.

To absorb impacts and vibrations caused by the unevenness of the surface of the slope while sliding, the main frame 2 itself is capable of absorbing impacts and vibrations because it is made of tough elastic carbon fiber and also because it has the form of a roughly horizontal "U" shape. Impacts or vibrations are not conducted to any large degree up to the rear part of the main frame 2 where the person P is seated. Therefore, the person P may fully enjoy sliding down a snow-covered slope.

Because the main frame, which is the main component member of the snow-slow bike, is made of lightweight carbon fiber, it is possible to reduce the overall weight of the snow-slow bike, unlike the example of the conventional snow-bicycle, in which a steel frame is used. Therefore, unlike the case of the metal snow-bicycle, if a collision occurs when using a snow-slow bike, injuries are less likely to occur and any injuries that do occur are likely to be minimal.

Because the snow-slow bike is composed only of the main frame 2, steering device 3, handle 4, and handle shaft 5, assembly costs may be kept low, making it possible to reduce the price of the snow-slow bike to the benefit of consumers. Regarding the design of the snow-slow bike, the main frame 2 makes up the main part and because it has the form of a roughly horizontal "U" shape, it features a superior and innovative design, providing high design impact.

As explained above, the snow-slow bike allows one to slide on the snow easily, like using a jet ski, when sliding down a steep slope.

The upper piece 12 of the main frame 2 is narrower than the lower piece 11, which is characterized by being provided with a foot brace 16 towards the front of its upper surface. Thanks to this structure, when the person P sits on the saddle 14 by riding on the upper piece 12, the upper piece 12 does not obstruct the person and the person can easily slip his feet into the foot brace 16. In this way, stable riding and sliding is assured.

Moreover, the rear end 15 of the lower piece 11 of the main frame 2 is characterized by being tilted upward, so the person P can raise the front of the snow-slow bike while in motion by pulling the handle 4 towards himself.

Because foot brace 17 is provided on the upper rear surface of the lower piece 11 of the main frame 2, in addition to riding the snow-slow bike while seated in the upright position, the person P can ride the snow-slow bike seated in the leaning-forward position, too.

The curved part 13 of the main frame 2 is made into a roughly "C" shape, so impacts and vibrations during sliding are absorbed by the curved part 13 and it features an innovative design with superior design impact.

The cross section of the curved part 13 of the main frame 2 has the shape of an arc and the structure of the main frame 2, which is made of elastic carbon fiber, is roughly a "U" shape. This combination of forms assures the efficient absorption of impacts and vibrations during sliding.

### BRIEF DESCRIPTION OF THE DRAWING

Figure 1 is a side view of a practical example of the snow-slow bike according to this invention;
Figure 2 is a front view of the snow-slow bike according to this invention;
Figure 3 is a rear view of the snow-slow bike according to this invention;
Figure 4 is the section A-A in Figure 1;
Figure 5 is a top view of the snow-slow bike according to this invention;
Figure 6 is a bottom view of the snow-slow bike according to this invention;
Figure 7 is the section B-B in Figure 1;
Figure 8 is the section C-C in Figure 1;
Figure 9 is an enlarged cross section view of the upper piece of the main frame of the snow-slow bike according to this invention;
Figure 10 is an enlarged cross section view of the lower piece of the main frame of the snow-slow bike according to this invention;
Figure 11 shows the rider seated in the upright position on the snow-slow bike according to this invention;
Figure 12 shows the rider seated in the leaning-forward position on the snow-slow bike according to this invention;
Figure 13 is an enlarged cross section view of the foot braces of the snow-slow bike according to this invention;
Figure 14 is an enlarged cross section view of another practical example of the foot brace of the snow-slow bike according to this invention;
Figure 15 is a top view of another practical example of the foot brace of the snow-slow bike according to this invention;
Figure 16 is a side view of another practical example of the snow-slow bike according to this invention;
Figure 17 is a top view of another practical example of the snow-slow bike according to this invention; and
Figure 18 is an enlarged section view of the edge part, when made of titanium, of the snow-slow bike.

### DETAILED DESCRIPTION OF THE PREFERRED EMBODIMENT

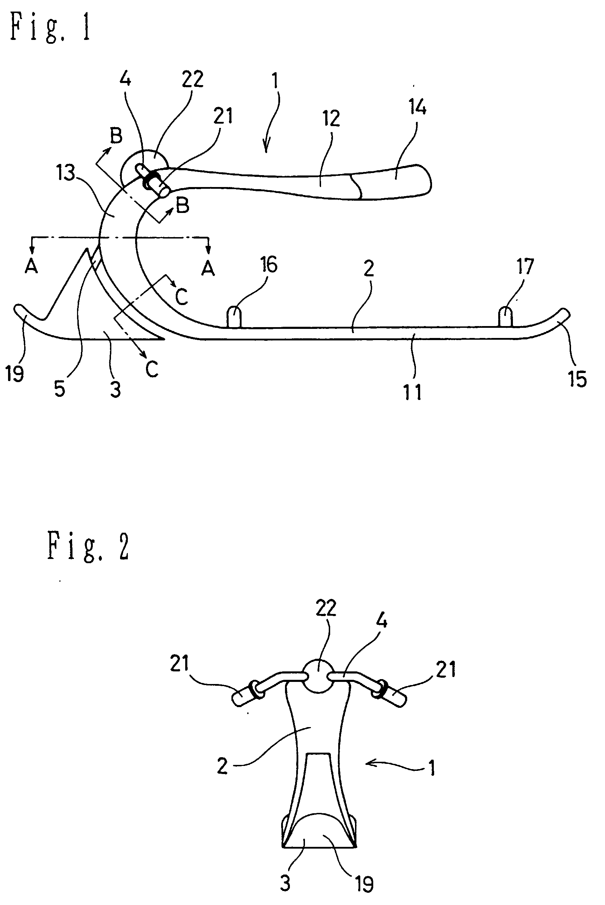

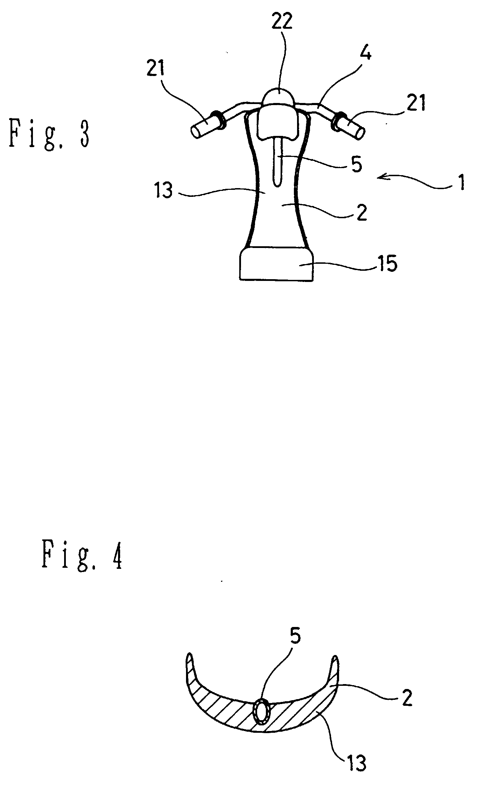

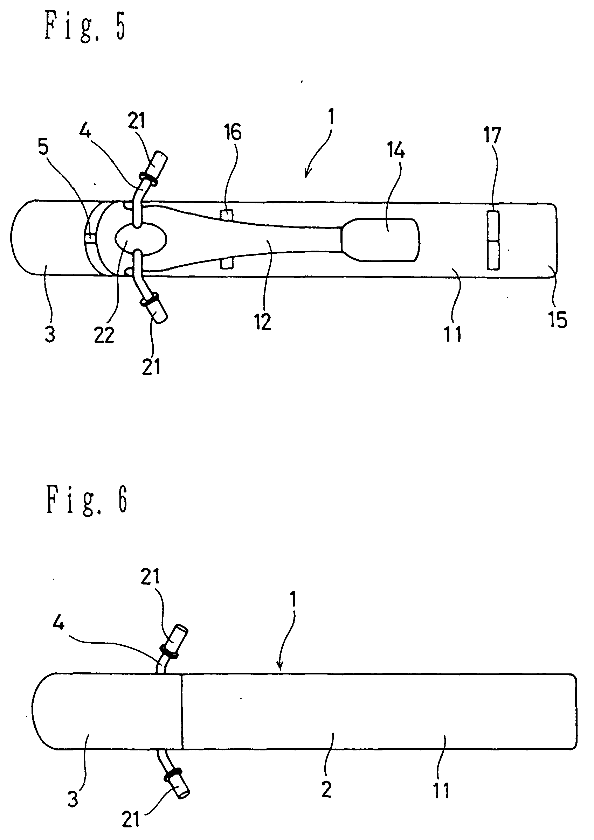

Figure 1 is a side view of the snow-slow bike according to this invention, Figure 2 is a front view of the snow-slow bike, Figure 3 is a rear view of the snow-slow bike, Figure 5 is a top view of the snow-slow bike, and Figure 6 is a bottom view of the snow-slow bike.

This snow-slow bike is composed mainly of the main frame 2, which has a roughly horizontal "U" shape when viewed from the side, the handle 4 attached to the upper front part of the main frame 2, and the handle 5 that conveys the turning motion of the handle 4 to the steering device 3.

The main frame 2, which is shaped somewhat like a "U," is made of lightweight, tough, and elastic carbon fiber. The main frame 2 is composed of the lower piece 11 shaped like a runner whose lower surface comes into contact with the snow, the upper piece 12 where the person sits, and the center piece 13 curved in an arc so as to connect the upper piece 12 and the lower piece 11.

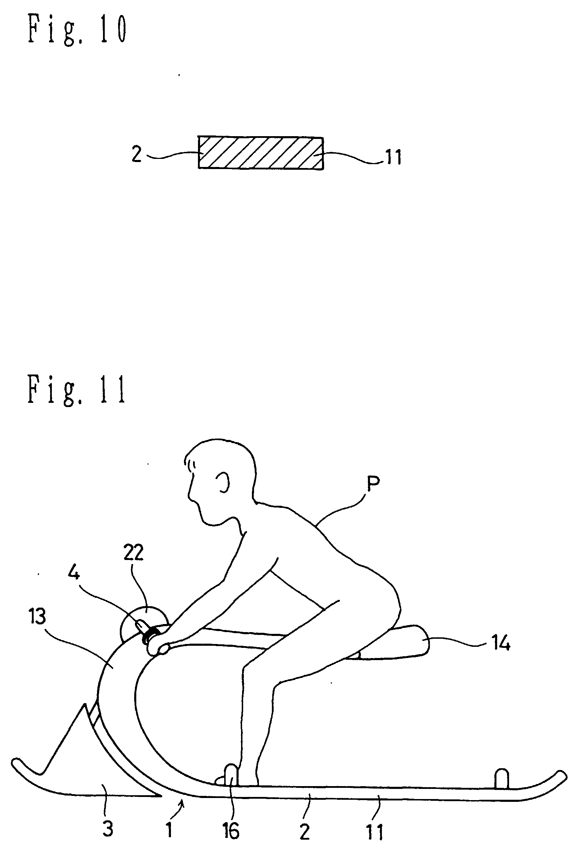

As can be seen in Figure 5, the upper piece 12 of the main frame 2 is narrower than the lower piece 11 and it is tapered, being wider near the center piece 13 and narrower towards the rear end, where a vinyl or rubber saddle 14 is attached. The person P sits on the saddle 14. As is shown in Figure 11, the person grips the handle 4 with both hands while seated on the saddle 14, straddling the upper piece 12. Because the upper piece 12 is tapered, it is easy to straddle the upper piece 12 of the main frame 2.

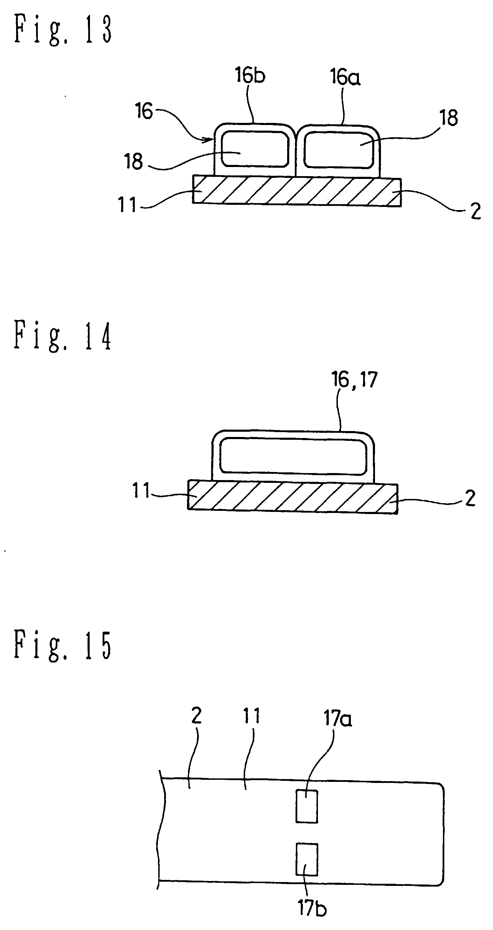

As is shown in Figure 1, the rear end 15 of the lower piece 11 of the main frame 2 is bent slightly upwards, and on the upper surface of the lower piece 11 foot braces 16 and 17 are attached with adhesive near the front and near the back to give the person a place to insert his feet. These foot braces 16 and 17 are made of rubber and, as is illustrated in Figure 13, a pair of braces 16a and 16b may be provided for the left and right feet (shoes). The braces have an open space 18 into which the feet can be inserted. The rear foot brace 17 has the same structure.

A rubber grip 21 is attached to each end of the titanium handle 4 and the upper part of the freely rotating handle shaft 5 is connected to the center of the handle 4. The handle shaft 5 is inserted from inside the center piece 13 of the main frame 2 to the outside and its lower part is connected inside the steering device 3. When the handle 4 is turned left or right, the steering device 3, linked to the handle 4, is turned left or right. Figure 4 is a cross section of line A-A in Figure 1; the cross section of the center piece 13 of the main frame 2 forms an arc that is thickest at the center.

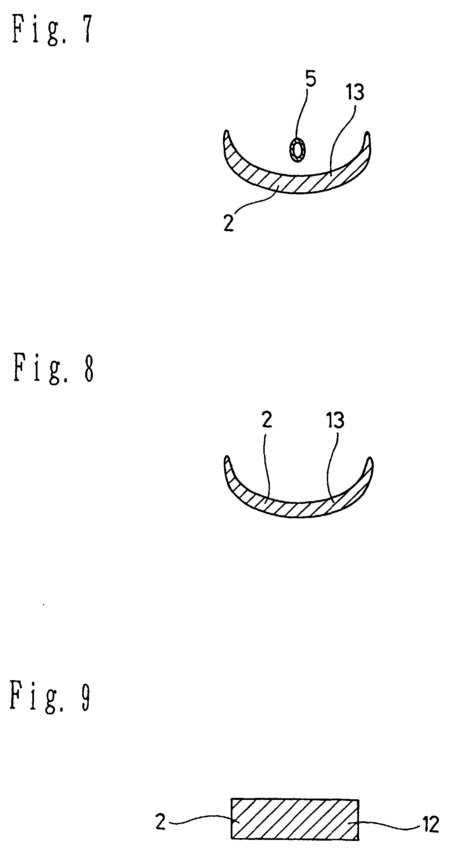

The cross section of the center piece 13 of the main frame 2 has the shape of an arc, as is shown in Figure 4, but the upper piece 12 and the lower piece 11 of the main frame 2 are slabs. Figure 7 shows the cross section at line B-B in Figure 1 and Figure 8 shows the cross section at line C-C in Figure 1. As is shown in Figure 7 and Figure 8, the cross section of the center piece 13 is an arc that gradually turns into a slab. The cross section of the upper piece 12 is a slab as is shown in Figure 9 and that of the lower piece is a slab as is shown in Figure 11. Note that the upper piece 12 is thicker than the lower piece 11.

The roughly U-shaped main frame 2 is one integral structure made of carbon fiber. Both edges of the lower surface of the lower piece 11 of the main frame 2 are beveled so that, as with ordinary skis, the edge can be used to turn in the left or right direction, or for braking to slow down or stop.

A urethane handle cover 22 is provided at the part where the handle shaft 5 and the handle 4 are connected. The steering device 3, hollow inside, is roughly triangular and is also made of carbon fiber, like the main frame 2. The lower part of this steering device 3 is made as smooth as an ordinary runner so as to slide easily over the snow. The front part 19 of the steering device 3 is bent upward so it can easily negotiate undulations on the slope. Both sides of the lower surface of the steering device 3 are beveled, like the main frame 2, so as to allow using the edge.

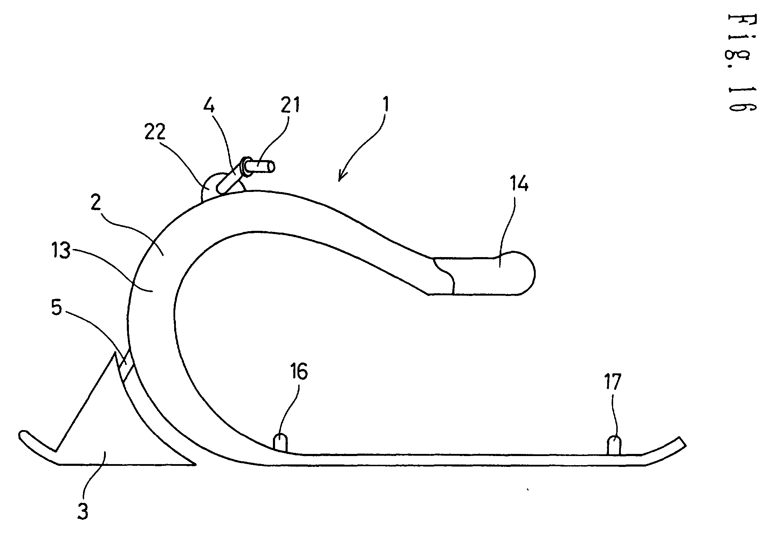

The snow-slow bike weighs about 8 kilograms, which is not very much different from a snowboard. The handle 4 shown in Figure 4 and elsewhere is angled downward but it may also be made to be angled upward (Figure 16).

Next is an explanation of the actual use of the snow-slow bike according to this invention. Figure 11 illustrates the person P sitting upright on the snow-slow bike. Here, the person sits on the saddle 14 and his left and right feet are in the front brace 16. The snow-slow bike slides over the snow on a downhill slope and the person can turn left or right by turning the handle 4. In addition, as with ordinary skis, one can also turn by using the edge of the steering device 3 and the lower piece 11 of the main frame 2 by tilting the snow-slow bike. To stop, one can stop sliding by using the edge of the steering device 3 and the lower piece 11 of the main frame 2 as a brake, as with ordinary skis.

Regarding the absorption of impacts and vibrations while sliding due to the unevenness of the surface of the slope, the main frame 2 itself absorbs impacts and vibrations as a result of the combined effect of three factors: the main frame 2 is composed of tough elastic carbon fiber, the main frame 2 is roughly a horizontal "U" shape, and the center piece 13 of the main frame 2 has an arc-shaped cross section. Therefore, the shock of impacts and vibrations is hardly felt in rear part of the main frame 2 where the person P is seated. As a result, the person P enjoys a pleasant ride over the snow. In other words, because the main frame 2 made of carbon fiber is itself elastic, impacts and vibrations during sliding are absorbed thanks to the multiple effects of the U-shaped main frame 2 and the center piece 13 with arc-shaped cross section.

The main frame 2, which is the main component of the snow-slow bike, is made of lightweight carbon fiber, so the overall weight of the snow-slow bike is lighter than that of a conventional snow-bicycle made with a steel frame. Therefore, should a collision occur, the chances of injury or damage are much lower than with a metal snow-bicycle.

Moreover, the snow-slow bike is assembled by adding the steering device 3, the handle 4, and the handle shaft 5 to the main frame 2, so assembly costs are low, making it possible for the price to be low, which is a benefit to consumers. Regarding the design of the snow-slow bike, the main frame 2 is the major part and it is in the shape of a roughly horizontal "U," featuring a superior design and powerful design impact.

In this way, the snow-slow bike makes it possible to slide easily over the snow and fully enjoy sliding down slopes, much like a jet ski on water.

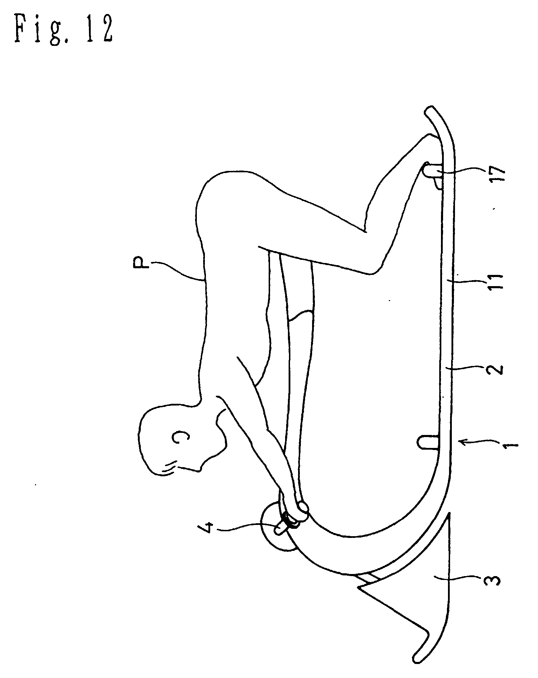

Figure 12 illustrates the person P seated in the leaning-forward position on the snow-slow bike. In this case, the person P's feet are inserted in the rear brace 17. This is an example of how the person P may enjoy riding the snow-slow bike in this way rather than sitting on the saddle 14. It is also possible to slide with most of the snow-slow bike standing up off the snow, by pulling back on the handle 4. In this case, the lower surface of the rear end 15 of the main frame 2 comes into contact with the snow for sliding.

Figure 14 shows another practical example of the foot braces 16 and 17. In Figure 13, the braces 16a and 16b are for separate feet but in Figure 14, the one brace 16 is designed to hold both feet. Figure 15 shows another practical example of the foot braces 16 and 17. In Figure 13, braces 16a and 16b are in contact with each other but in Figure 15, the two foot braces 17a and 17b are separated from each other.

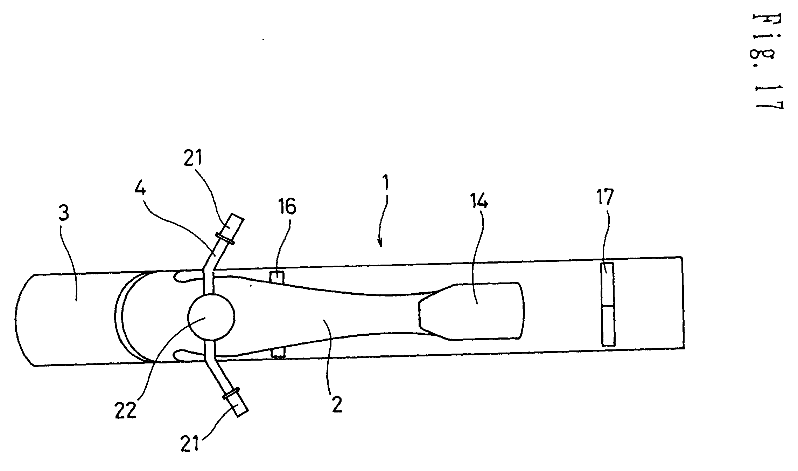

Figure 16 and Figure 17 illustrate other practical examples of the snow-slow bike, where the center piece 13 in the curved part of the main frame 2 is shaped roughly like a "C." The basic composition and function are the same as the snow-slow bike shown in Figure 1 but the handle 4 is angled upwards rather than downwards, as in the practical examples described earlier.

The weight of the snow-slow bike shown in Figure 1 and Figure 16 is about 8 kilograms, as was mentioned earlier, and in consideration of its lightweight, a mechanism to prevent the snow-slow bike from sliding away from the person P is needed. One way to stop the snow-slow bike from sliding down the slope if the person P falls off sideways, leaving the snow-slow bike, is to tie a cord to the person P's foot and anchor it at some part of the snow-slow bike, like between foot brace 16 and foot brace 17.

Also, it would be possible to attach a lever (not shown) to the grip 21 of the handle 4, so that a rod (not shown) would not protrude from the lower surface of the snow-slow bike while the person P holds that lever. If the person P releases the lever, the rod would be extended by the force of a spring (not shown), thereby stopping the snow-slow bike. It would also be possible to apply the force of a spring (not shown) to push the handle 4 in either direction; normally, the person P manipulates the handle but if the person P released the handle 4 when falling off sideways, the steering device 3 would be turned fully in one direction by the force of the spring (not shown), thereby stopping the snow-slow bike.

Regarding the form of the handle 4, it is shown angled downward in Figure 1 and angled upward in Figure 16 but its form is not limited in any specific way, and any free combination is possible.

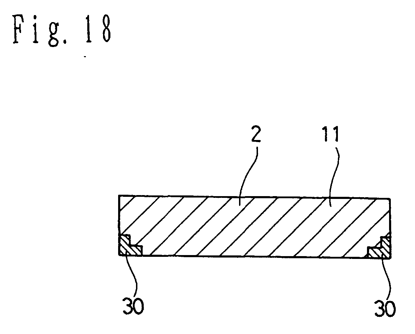

Figure 18 shows another practical example of the edge of the snow-slow bike shown in Figure 1 and Figure 16. In the practical examples shown earlier, the edge is made of carbon fiber, which is the same material used for the steering device 3 and the main frame 2, but in this practical example, titanium is used for the edge 30. Because titanium is light but also hard, it improves the effectiveness of using the edge on icy or snowy surfaces.

As is shown in Figure 18, the titanium edge 30, with a roughly L-shaped cross section, is integrated into both edges of the lower surface of the main frame 2 and the steering device 3 along the entire length. Also, a thin slab of titanium is placed on the lower surface of the front part 19 of the steering device 3 and the lower surface leading to the center piece 13 and the lower piece 11 of the frame main body 2. For the other parts, an L-shaped titanium strip is integrated into the edge 30, as was described.

As an alternative, hard synthetic resin may be integrated into the edge 30 instead of titanium.

## Claims

1. A snow-slow bike characterized by being composed of the main frame 2 made of carbon fiber in a roughly horizontal "U" shape, on which the rear part of its upper piece 12 is formed into a seat, the lower surface of the lower piece 11 is made into the sliding surface; the handle shaft 5 attached so as to rotate freely to the curved part 13 forming the front part of this main frame 2; the freely rotating handle 4 attached to the top of the handle shaft 5; and the steering device 3 interlocked with the operation of the handle 4 being connected to the lower part of the handle shaft 5 at the front of the main frame 2.

2. The snow-slow bike specified in paragraph 1 above characterized by the fact that the upper piece 12 of the main frame 2 is narrower than the lower piece 11 and the fact that the foot brace 16 for inserting the feet is provided towards the front of the upper surface of the lower piece 11.

3. The snow-slow bike specified in paragraph 1 or paragraph 2 above characterized by the fact that the rear end 15 of the lower piece 11 of the main frame 2 is tilted upward.

4. The snow-slow bike specified in any of paragraphs 1 to 3 above characterized by the fact that the foot brace 17 for inserting the foot is provided towards the rear of the upper surface of the lower piece 11 of the main frame 2.

5. The snow-slow bike specified in any of paragraphs 1 to 4 above characterized by the fact that the curved part 13 of the main frame is formed roughly in a "C" shape.

6. The snow-slow bike specified in any of paragraphs 1 to 5 above characterized by the fact that the curved part 13 of the main frame 2 has an arc-shaped cross section.
